Europäisches Patentamt

European Patent Office

Office européen des brevets

(11) Publication number: **0 248 655**
**A2**

(12) **EUROPEAN PATENT APPLICATION**

(21) Application number: 87304918.3

(22) Date of filing: 03.06.87

(51) Int. Cl.⁴: **F 01 B 7/12**
**F 02 B 75/32**

(30) Priority: 04.06.86 US 870507

(43) Date of publication of application:
09.12.87 Bulletin 87/50

(84) Designated Contracting States:
AT DE FR GB IT SE

(71) Applicant: **The Trustees of Columbia University in the City of New York**
**Morningside Heights**
**New York, NY 10027 (US)**

(72) Inventor: **Freudenstein, Ferdinand**
**435 West 259th Street**
**Bronx New York 10471 (US)**

(74) Representative: **Rees, David Christopher et al**
**Kilburn & Strode 30 John Street**
**London WC1N 2DD (GB)**

(54) **Swing beam internal combustion engines.**

(57) An internal combustion engine of the swing beam type, comprising a cylinder (10), piston (12), crankshaft (22) and swing beam (40), includes a variable position pivot (44) which is movable, in response to the engine cycle. The variable position pivot is controllable to adjust the pivot point of the swing beam (40) in order to optimise the operating parameters of the engine, such as the cycle timing, stroke and compression ratio.

EP 0 248 655 A2

**Description**

SWING BEAM INTERNAL COMBUSTION ENGINES

This invention relates to internal combustion engine mechanisms. The invention is particularly applicable to improving fuel economy in an internal combustion engine.

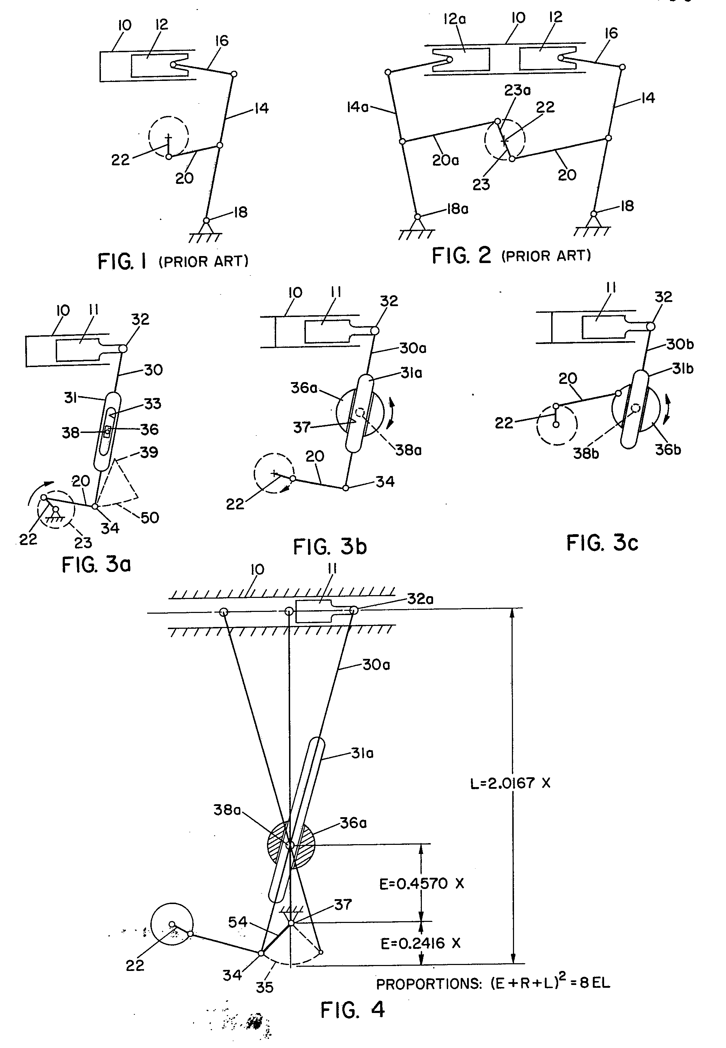

Conventional internal combustion engines, both Otto and Diesel, rely principally on the in-line slider-crank mechanism. In this type of engine, a connecting rod couples each piston directly to a common crankshaft. Another basic type of engine configuration, that has been used in some diesel engines, is known as a swing beam engine. Swing beam engines date back to the turn of the century, and are shown schematically in Figs. 1 and 2 of the drawings.

Referring to Fig. 1, a known swing beam internal combustion engine includes a cylinder 10 and piston 12, with a swing beam 14 pin-connected to the piston 12 by a connecting link 16. The swing beam 14 is fixedly pivoted, at its opposite end, at pivot point 18. Finally, a connecting rod 20 pivotably connects the swing-beam 14 and a crankshaft 22. The crankshaft 22, connecting rod 20, swing beam 14, and fixed pivot 18 constitute a four-bar rocker linkage of which the swing beam is the rocker.

Normally, two mirror-image swing beam configurations are connected complimentarily, as shown in Fig. 2, resulting in opposed pistons sharing a common cylinder. In Fig. 2, mirror image components are numbered with the designation "a". The crankshaft 22, comprising crank arms 23 and 23a, actuates both halves of the mechanism. The balance of forces in this arrangement is favourable, except for the rotational inertia of the connecting rods 20, 20A, and some asymmetry in the motion of the connecting rods, which is imparted to the swing beams and pistons. Combustion takes place internally, in the space between the pistons 12 and 12a.

A number of variations of the basic arrangement shown in Fig. 2 have been proposed. For example, in an article entitled "Quiet Swing Beam Has Variable Compression Ratio", D. Scott, Automative Engineering, April 1977, pages 10-12, the author proposes mounting the lower ends of two swing beams, in a two stroke swing beam diesel engine, in eccentric bearing shafts. According to this proposal, a spring tensioned, toothed belt is arranged between pulleys on the two eccentric shafts and, when the engine is running, the torque pressure of the beams against the eccentrics moves the belt slightly against its retaining spring, thus shifting the fulcra to reduce piston travel. This permits starting a diesel engine at a 20:1 compression ratio. When the engine is running, the compression ratio is lowered to about 13:1.

In the Scott engine, top dead center of the pistons occurs at bottom dead center of the crank. Because of this, crank-pin motion is subtracted from the straightening movement of the connecting rod during the first part of the power stroke. This has the effect of slowing piston movement relative to the cylinder at the beginning of the power stroke (although the overall duration of the power stroke is the same as in conventional slider-crank engines), which improves combustion. The Scott article also suggests that an eccentric coupler can replace the piston connecting rod.

The piston connecting rods (i.e., the rod between the piston and swing beam) in a swing beam engine can be shorter than the piston connecting rods in a conventional slider-crank engine, because the angular swing of the connecting rod, relative to the central piston axis, is generally less in a swing beam engine. Possibly, the rods could even be replaced by eccentrics as suggested by Scott.

Thus, an internal combustion engine is known which has a cylinder, a piston displaceable in the cylinder, a crankshaft, a swing beam, first coupling means connected between one end of the swing beam and the piston, second coupling means connected between the crankshaft and the swing beam, and pivot establishing means, including pivot means about which the swing beam is rotatable.

Other internal combustion engines have been proposed in an attempt to improve the performance of conventional slider-crank engines. These include the offset slider-crank engine, planetary drives and other engines based on standard, single degree-of-freedom mechanisms, the proportions of which have been altered to improve engine efficiency. In all such engines the original engine construction or motion, which is symmetrical, is skewed, i.e. rendered asymmetric, in order to produce the varied engine operating characteristic. By doing so, however, the resulting asymmetrical mechanism possesses such unfavourable dynamic imbalance and force-transmission characteristics that the engine is impractical.

The invention as claimed is intended to remedy the draw backs of the prior art. It provides a swing beam engine in which the piston displacement can be controlled during the engine cycle to produce an improved thermodynamic cycle, for example longer power stroke relative to the compression stroke (as in Atkinson cycle operation), variable cycle operation and cycle timing, variable stroke and variable compression ratio.

The present invention is characterised by pivot varying means, which are operable to vary the position of the pivot means during the engine operation.

Thus the present invention is directed to an internal combustion engine mechanism with improved structure and with means for varying the stroke and the cycle timing for improved operating efficiency. The present invention has the inherent flexibility for varying the operating characteristics of an internal combustion engine to a degree not heretofore possible, for yielding improved fuel economy. Moreover, unlike prior art proposals, the engine operating characteristics may be modified to achieve improved engine performance without any significant diminution of the dynamic operating characteristics of the engine. In addition, engines according to the present invention are compact in size.

Preferably, the invention can comprise drive means for moving a control shaft associated with the pivot establishing means in a periodic motion.

Preferably, where the invention includes a control shaft, it is in the form of a crank, and comprises means for rotating the control shaft at a speed which is a multiple of one-half crankshaft speed.

Preferably, the first coupling means comprises a connecting link between the piston and swing beam, the second coupling means comprises a connecting rod between the crankshaft and swing beam, and the control shaft is pin connected to the swing beam.

Equally preferably, the first connecting means can comprise a pin directly connecting the swing beam to the piston, the second connecting means comprise a connecting rod between the crankshaft and swing beam, and the control means include a connecting link between the control shaft and swing beam.

Preferably an engine according to the invention includes a Rapson slide mechanism. In this case the Rapson slide elements can be arranged between the first and second connecting means.

Preferably, when an engine according to the invention includes a Rapson slide mechanism the second connecting means is arranged between the Rapson slide elements and the first connecting means.

Preferably, the first connecting means comprises a pin directly connecting the swing beam and piston, the second connecting means comprises a connecting link between the crankshaft and swing beam, and the control means includes a pair of co-operating Rapson slide elements, one pivotably mounted on the control shaft and the other being incorporated in the swing beam. In this case it is preferable that the Rapson slide elements are arranged between the first and second connecting means. Alternatively, the second connecting means can be arranged between the Rapson slide elements and the first connecting means.

When an engine according to the invention includes guide means for guiding a sliding block it is preferable that it further includes means for selectively moving the position of the guide means for changing the compression ratio of the engine.

According to a second aspect of the invention an internal combustion engine comprises a plurality of inline cylinders; a piston slideable in each cylinder; a crankshaft; a swing beam associated with each piston; first coupling means between one end of each swing beam and its associated piston; second coupling means between each swing beam and the crankshaft; pivot establishing means engaging each swing beam for causing the swing beam to rotate about the said pivot; control means for controlling the position of each pivot establishing means, including a unitary control shaft and drive means for moving the control shaft in a controlled manner responsive to engine operation.

As mentioned above, the present invention is designed for use on various engine operating cycles, in particular on Otto or Atkinson cycles with fixed or variable stroke and constant or variable compression ratio.

According to a third aspect of the invention there is provided an internal combustion engine having a cylinder, a piston displaceable in the cylinder, a crankshaft, and a swing beam; means for coupling the swing beam directly to the piston; Rapson slide means for permitting the swing beam to slide and rotate about a fixed pivot including a first element pivotable about the fixed pivot and formed to engage a second element for sliding along an axis through the fixed pivot, wherein the swing beam includes a co-operating portion slideably engaging the first element thereby to be displaceable along the axis, coupling means between the swing beam and crank for transmitting movement therebetween.

Preferably, according to a preferred embodiment of this third aspect of the invention the coupling means comprises a connecting rod pivotably connected to the swing beam and to the crankshaft.

When the coupling means comprises a connecting rod the swing beam has opposite ends, one connected to the piston and the other connected to the connecting rod, and the Rapson slide means are located between the opposite ends, such that the opposite end follows an essentially arcuate path. In this case the crank and connecting rod are proportioned to execute a non-centric rocker linkage motion such that the time duration of the power stroke timing of the piston is longer than that of the compression stroke. Or alternatively, the swing beam is proportioned so that the trajectory of the swing beam opposite end is essentially a circular arc.

When the swing beam is so proportioned, a rocker element is pivotably connected between the swing beam opposite end and the center of the circular arc, and said piston is connected to the piston through an eccentric.

Preferably, according to another embodiment of the third aspect of the invention, the connecting means comprises a connecting rod pivotably connected to the first element of the Rapson slide means and to the crankshaft.

Preferably, according to yet another embodiment of the third aspect of the invention, the first element of the Rapson slide means is a pivotably mounted guide block and the co-operating portion of the swing beam is a guide element having a slot therein for slideably receiving the guide block.

Preferably, in an embodiment of the third aspect of the invention, the first element of the Rapson slide means is a pivotably mounted guide block having an elongated slot therein and the co-operating portion of the swing beam is a guided element disposed in the slot.

The invention also extends to an internal combustion engine having a novel swing beam mechanism utilizing a Rapson slide motion.

The invention also extends to a novel internal combustion engine based on two degrees-of-freedom mechanisms in which the piston displacements during the engine stroke are a function of the displacements of both the crankshaft and a separate control element. The latter may comprise a control shaft that functions as a crank or lever, or other elements. In one type of application, the control shaft operates at an average speed which is a prescribed ratio of crank speed, thereby yielding an improved thermodynamic cycle (such as the Atkinson cycle in the case of a four-stroke engine). The phasing between the control shaft and the crankshaft may be modified to vary the timing of piston movement during the cycle. In another type of application, the control shaft functions as a lever for obtaining variable stroke operation. Finally, The control means may be used for variable compression ratio operation.

Preferably, therefore, an internal combustion engine, according to the invention includes a cylinder, a piston slideable in the cylinder, a swing beam having opposite ends, and means pin connecting one end of the swing beam to the piston (i.e. without the intervention of a connecting rod). A swinging block, pivotable about a fixed point, slidingly engages the swing beam so that the swing beam rotates and slides relative to the fixed point. The swing beam, swinging block, cylinder and piston form a type of Rapson slide mechanism. A connecting rod is pivotably connected at one end to the crankshaft and at its other end either to the swing beam or to the swinging block of the Rapson slide mechanism.

Preferably, the engine comprises a sliding block engaged with the pivot establishing means; guide means for guiding the sliding block along a predetermined path of movement; and coupling means connected between the control shaft and the sliding block.

Preferably, the guide means guide the sliding block along a substantially linear path of movement oriented such that, for various positions of the sliding block along the path, the compression ratio of the engine and top dead center timing remain essentially constant.

In one embodiment, the swing beam has a guide portion that slidingly receives a swinging block. The swinging block is fixed on a pivot. As the piston moves back and forth in the cylinder, the swing beam slides and rotates around the fixed pivot. The lower end of the swing beam is connected by a connecting link to the crankshaft, and moves in an arc. The mechanism can be proportioned so that the lower end describes a close approximation of a circular arc, and a rocker link may be pin-connected to the lower end for added strength. In this case, a small eccentric is used to connect the upper swing beam to the piston.

In a modified arrangement, the swing beam also slides within a swinging Rapson guide block that pivots about a fixed point. However, the connecting link from the crankshaft is pin connected to the swinging guide block rather than to the swing beam. In this arrangement, rotational movement of the guide block, which is caused by movement of the piston, is imparted to the crankshaft through the connecting link. Such mechanism provides a very compact design.

Preferably, the control means comprise rocker means coupled to the control shaft, and a pair of co-operating Rapson slide elements, one pivotably mounted on rocker means and the other constituting part of the swing beam.

Preferably, means are provided for moving the control shaft in a periodic movement for varying piston stroke during engine revolution.

In accordance with a preferred form of the invention, an internal combustion engine comprises a cylinder and a piston slideable in the cylinder, and a swing beam having opposite ends connected, either directly or by an intervening connecting link, to the piston. A crankshaft is also connected to the swing beam, either directly or through the intervention of another connecting link, and the swing beam slides and rotates around a pivot point. In this embodiment, the linkage controlling the movement of the piston is based on a two degrees-of-freedom mechanism for optimizing the thermodynamic cycle and the timing of cycle events.

More particularly, the movement of the piston is a function of the displacement of the crankshaft and also the displacement of a control means whose output is connected to the pivot point of the swinging block for moving the pivot point in a controlled manner. The stroke length and the timing of the piston movement may be controlled and varied in a desired manner.

In one form, the piston is connected, by a connecting link, to the swing beam. The other end of the swing beam is connected to a rotating control shaft, and the crankshaft is connected, by a connecting link, to the swing beam between its ends. In fourstroke engines the control shaft rotates preferably at an odd multiple of half crankshaft speed, for example at half crankshaft speed, and varies the piston stroke so that the length of the piston travel is greater during the power stroke than during the compression stroke as in an Atkinson cycle operation, and also optimizes timing.

In a modified embodiment, the swing beam is directly pin-connected to the piston, without the intervention of a connecting rod. In this case, however, both the crankshaft and the control shaft are connected to the swing beam by way of connecting links.

In other embodiments of the invention, a swinging block, coupled to the control shaft, slidingly engages the swing beam, to form a Rapson slide mechanism; but, the pivot for the swinging block is coupled to the control shaft rather than being fixed. In one embodiment, the swing beam is pin connected to the piston and connected through a connecting rod to the crankshaft. In another embodiment, the swing beam is connected through a connecting link to the piston, and pin connected to the crankshaft.

In a further embodiment of the invention in which the swing beam slides and rotates about the pivot axis of a swinging block, the pivot point of the swinging block is moveable in a controlled, preferably linear, manner by a control shaft. The control shaft may be designed to rotate continuously to produce an Atkinson cycle, or it may be designed to act as a lever, to modify the length of the piston stroke. The mechanism may be proportioned so that the pivot may be moved along a fixed, linear guideway in such a manner that the piston stroke can be varied essentially without changing the compression ratio or top dead center timing.

In this latter embodiment, the mechanism may be modified so that the orientation of the linear guideway itself is variable to provide an additional, independent control of the compression ratio of the engine. Alternatively, in place of a linear guideway the movement of the pivot can be controlled by a rocker linkage or other means.

Other variations of the aforementioned embodiments, using Rapson slide mechanisms, may be employed using various combinations of connecting links between the swing beam and piston, the swinging block and control shaft, and the crankshaft and swing beam.

The present invention can be put into practice in several ways some of which will now be described by way of example with reference to the accompanying drawings in which:

Figures 1 and 2 are schematic drawings of prior art swing beam engines, illustrating a single piston and an opposed piston arrangement, respectively;

Figures 3a, 3b and 3c illustrate three embodiments of a compact swing beam engine according to the present invention using a Rapson slide mechanism;

Figure 4 is a schematic illustration of a fourth embodiment of a compact swing beam engine using a Rapson slide mechanism;

Figure 5a) is a schematic drawing of a fifth swing beam engine having control means based on a two degrees-of-freedom mechanism for obtaining Atkinson cycle operation;

Figure 5b) is a drawing showing various piston top dead center and bottom dead center positions in accordance with the embodiment of Figure 5a);

Figure 5c) is a table of the various piston positions and movements of the engine shown in Figure 5a);

Figure 6 is a schematic drawing of a sixth embodiment of a swing beam engine with control means according to the present invention;

Figures 7a), b), c) and d) are schematic drawings of other embodiments of swing beam engines having control means according to the present invention;

Figure 8a) is a schematic drawing of a swing beam engine according to the present invention having Rapson slide elements and control means for adjusting the pivot position;

Figures 8b) and 8c) are top and perspective schematic drawings of the slide block mechanism in Figure 8a);

Figure 8d) is a schematic drawing of an engine incorporating the linkage of Figure 8a);

Figure 8e) is a sectional view taken through lines A-A of Figure 8d);

Figure 9 is a schematic drawing of the stroke control layout of an engine in accordance with figure 8a), for providing a variable stroke operation, at essentially constant compression ratio and top dead center timing;

Figure 10 is a schematic drawing of a modified guide in a Rapson slide mechanism for use in figure 8a);

Figure 11 is a Rapson slide swing beam engine according to the present invention with rocker control means; and

Figures 12a), b) and c) are schematic views illustrating the operation of a four-cylinder Rapson slide swing beam engine according to the present invention.

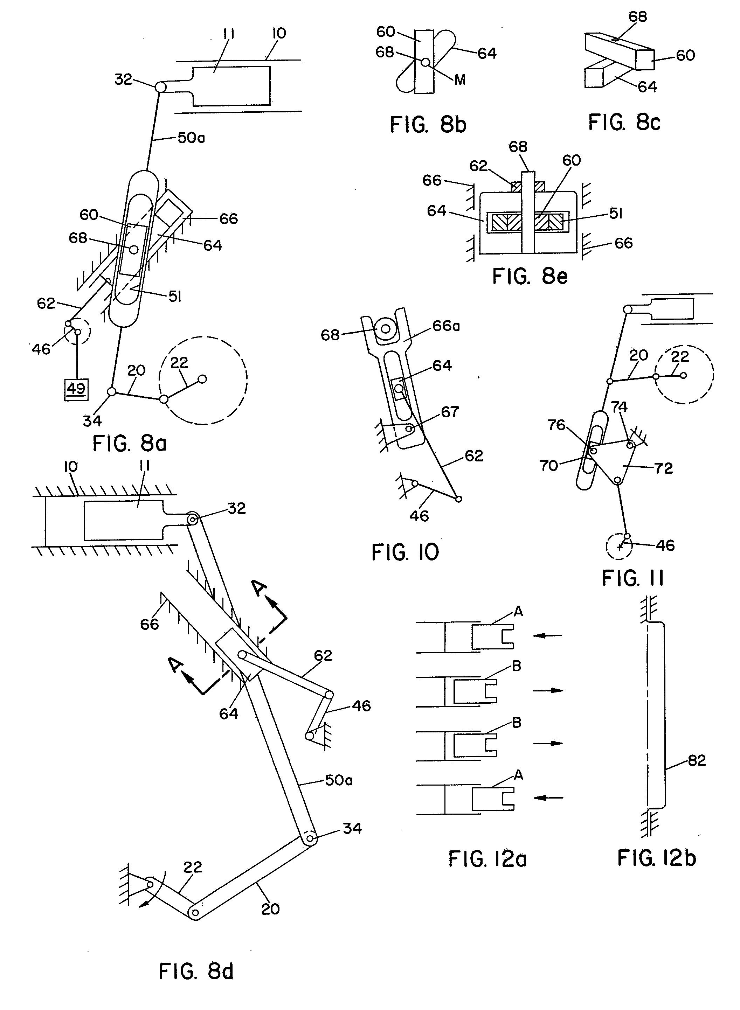

Figures 3a)-3c) are three embodiments of Rapson slide type swing beam engines. For the purposes of illustration, these figures and other figures show a single piston engine. However, it would be readily apparent also to construct engines with an opposed piston structure, in the manner illustrated in figure 2. Most preferably, the mechanisms described herein are intended to be employed in spark ignited, multiple cylinder engines, one such engine being shown in Figures 12a), b) and c) in connection with another embodiment. Opposed-piston engines, as well as multiple cylinder engines are within the scope of this invention.

The engine shown in Figure 3a) includes a cylinder head 10, a piston 11, a crankshaft 22, a connecting rod 20, and a swing beam 30. The swing beam 30 is pin connected, i.e. directly connected, at one end 32 to the piston 11 and at its other end 34 to the connecting rod 20.

A portion of the swing beam 30 is in the form of a guide 31 having an elongate slot 33 therein. A swinging block 36 which is pivotable around a fixed pivot 38, is disposed in the slot 33 such that the swing beam 30 is free to slide in the longitudinal direction, but must always rotate about the fixed pivot 38. The guide 31 and co-operating block 36 act in conjunction with cylinder 10, piston 11, and swing beam 30, to produce a form of Rapson slide, of the type used in the actuation of rudders in ships. Because the guide elements 31 and the block 36 pivotably, and slidingly, support the swing beam 30 between piston 11 and connecting rod 20, there is no need for a connecting rod between the piston and the swing beam.

As used in the specification and claims, the term "Rapson slide elements" refers to the combination of a swinging block, e.g. 36 (or swinging block 36a or 52 or 60 or 70 as described in other embodiments) having a pivot, e.g. 38, and a second element (e.g. 31) that slides and rotates relative to the pivot axis. Such a mechanism, when the second element is a swing beam, produces a Rapson slide type motion in a swing beam engine.

Referring again to Figure 3a), as the piston 11 slides in cylinder 10, the swing beam 30 slides and rotates about pivot 38, and the guide portion 31 of swing beam 30 slides relative to block 36 to accommodate changes in the distance between pivot 38 and moving end 32. The lower end 34 of the swing beam 30 moves back and forth, as indicated by dashed lines 50, in conjunction with the crankshaft 22. The rotational movement of the crankshaft 22 is indicated by dashed lines 23.

Figure 3b) is the equivalent of Figure 3a), except that the guide groove is in a swinging block 36a rather than the swing beam. A swing beam 30a is pin connected at its upper end 32 to piston 11 and at its lower end 34 to connecting rod 20. The swing beam 30a has a portion 31a between the ends 32, 34 formed as a sliding member, which is slidingly received in the groove 37 of the swinging block 36a. The swing beam 30a can slide and rotate about fixed pivot point 38a, since it is free to slide longitudinally relative to the swinging block 36a, and operates in a manner similar to Figure 3a).

In the modification shown in Figure 3c) a swing beam 30b is again directly pin-connected to the piston 11 and has a slide portion 31b. The portion 31b is received in a swinging block 36b pivotable about a fixed pivot 38b. The connecting rod 20 is pin-connected to the swinging block 36b, rather than to the swing beam 30b, to produce a laterally and vertically compact configuration.

The swinging blocks 36, 36a and 36b of the various embodiments need to be given proportions sufficient to sustain the various forces imparted. In figures 3a) and 3b), the swinging block 36, 36a needs to be able to sustain the linear force exerted on the pivot pin 38, 38a, by virtue of the fact that pivot 38, 38a acts as a fulcrum between opposite ends of a lever, swing beam, 30, 30a. In the case of Figure 3c, the swinging block 36b needs to be able to sustain not just linear force on the pivot 38b, but also torque imparted to the swinging block 36b by swing beam 30b in transmitting driving force from the piston to the crankshaft.

Referring again to Figure 3a), while the swing beam ends 32 and 34 lie on opposite sides of the pivot 38, because of the Rapson slide elements 31, 36 they do not execute the same motion. This is true even if the pivot 38 is symmetrically located between the ends 32, 34. It can be shown from kinematic theory or layout that the trajectory of the pivot point 34, joining connecting rod 20 and swing beam 30, represents an approximate circular arc 50 having a center 39. Hence, crankshaft 22 and connecting rod 20 execute a motion which constitutes a close approximation to the crank and coupler of a crank and rocker linkage, in which the dimension from points 39 to 34 may be regarded as the length of a virtual rocker. By proportioning the crank and rocker linkage so that it is of the non-centric type (that is, the positions of the crank 22, at opposite extremes of the arc 50, are not 180° apart), the forward and return motions of the piston are of unequal time duration. The unequal motion may be used to advantage to lengthen the time duration of the power stroke relative to that of the compression stroke, and hence to improve combustion efficiency.

For example, the linkage may be proportioned, as generally indicated in Figure 3a, so that the leftmost travel of joint 34 occurs when the crankshaft 22 is near the 270° (9 o'clock) position, but so that joint 34 reaches the right end of arc 50, which corresponds to the compression stroke of piston 11, before the crank arm 22 has reached the 90° (3 o'clock) position, i.e. in less than half a crank revolution. During the opposite direction of piston travel, which corresponds to the power stroke, crank arm 22 would travel more than 180°. Thus, instead of having power and compression strokes of equal time duration, i.e. half a crankshaft revolution each, the power stroke has a longer time duration than the compression stroke. Proportioning of a crank and rocker linkage, to produce a non-centric movement is a matter of known kinematic design. Thus, by utilising such principles, the present invention can readily be proportioned to produce the desired cycle timing.

Figure 4 illustrates another embodiment of a compact swing beam engine using a Rapson slide mechanism, similar to Figure 3b. In the embodiment of Figure 4, the Rapson slide portion of the swing beam engine is proportioned so that the trajectory of pivoting joint 34 possesses six symmetrically disposed points on a common circular arc 35, shown in dashed lines. The dimensioning of the Rapson slide to produce this movement may be determined from the theory of minimum error linkage synthesis, which is discussed in the inventor's article, "Structural Error Analysis in Plan Kinematic Synthesis", F. Freudenstein, Trans. A.S.M.E. 81B, J. Eng. Ind., 1959, pp. 15-22; and in "Angenaherte Synthese von Mechanismen", S. Sch. Bloch, Verlag Technik, Berlin 1951, the disclosures of which are incorporated herein by reference.

As an example, in Figure 4, the swing beam 30a may have a length of 2.0167 X, where X is a constant, with the pivot point 38a located at a distance 0.6986 X from point 34. With this geometry the pivot point 38a and center 37 of rotation of arc 35 lie on a line perpendicular to the piston axis, such that the distance "E" between points 38a and 37 is 0.4570 X, and the radius "R" of the arc 35 is 0.2416 X. The relative dimensions have the following relationship:

$$(E + R + L)^2 = 8EL$$

For practical purposes, therefore, the trajectory of point 34 is almost indistinguishable from this circular arc 35. Accordingly, an extra rocker 54 may be connected to joint 34, the length of which is equal to the radius of curvature of the circular arc generated by point 34. The ability to use a rocker 54 provides an exceptionally sturdy construction.

If a rocker 54 is added, it may be necessary to connect the upper end of the swing beam 30a to the piston 11 by means of a small eccentric, indicated by 32a. This is true because where the upper end of swing beam 30a is pin connected to the piston, and therefore moves exactly in a straight line parallel to the piston axis (as in figures 3a, b, and c), the arc 35 described by joint 34 is not perfectly circular. Therefore, if joint 34 is connected to a rocker 54, and thus forced to follow an exact circular arc, it follows that the upper end 32a of the swing beam 30a cannot move exactly in a straight line. With an optimal linkage design, as described above, the deviation of point 32a from straight line movement is minimal, on the order of 1/32" or less. If the engine tolerances are not sufficient to take up this movement, the deviation can be taken up by a small eccentric, as indicated by 32a. Eccentric bearings of a suitable type are known.

In all of the aforementioned embodiments, the amount of sliding between the swing beam and the swinging block is relatively small. In the case of an engine having a 90 mm stroke and a maximum swing beam angularity (relative to the mean position of the swing beam) of 15°, the maximum sliding can be calculated as:

$(1/2)(90)(1 - \cos 15°) = 1.53$ mm, or 1.7% of stroke. For practical purposes, the corresponding energy loss is negligible.

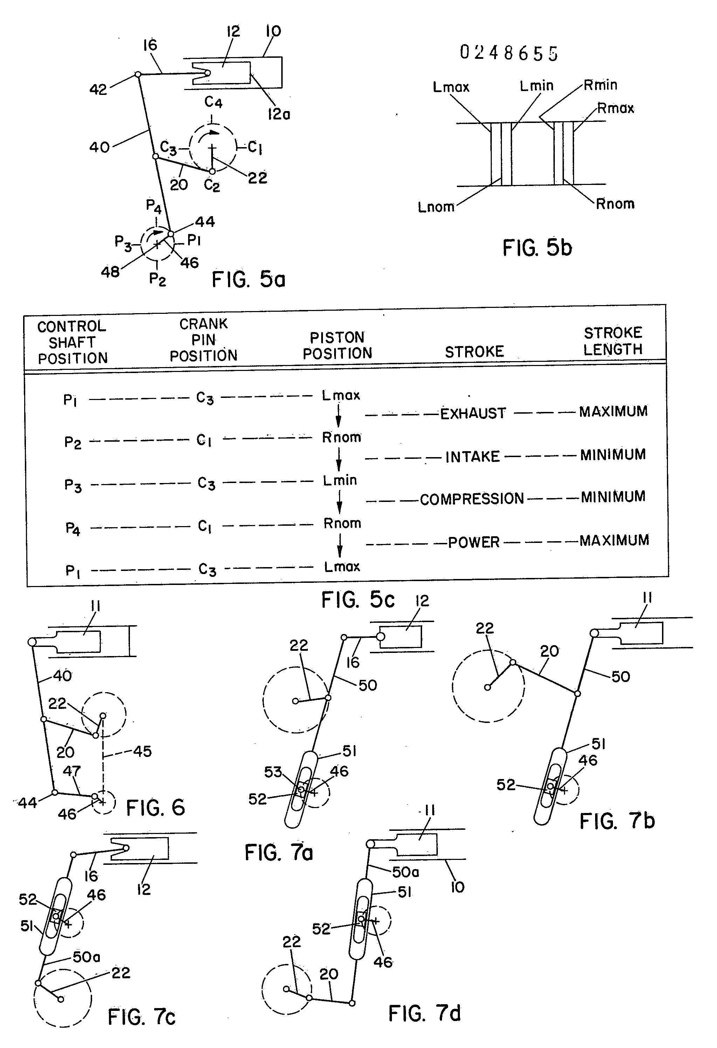

Figures 5-12 illustrate internal combustion engines based on two-degrees-of-freedom mechanisms for optimizing the thermodynamic cycle and the timing of piston movement during the cycle. The piston displacements in these mechanisms are functions of two displacements; the displacement of the crankshaft and the displacement of a second element, which will be referred to as a control shaft. As discussed below, the control shaft may act through a group of elements. In these embodiments, one degree of freedom corresponds to the rotation of the crankshaft, while the second is effected through control means.

One known thermodynamic cycle for operating a four cycle internal combustion engine is the Atkinson cycle. A basic characteristic of the Atkinson cycle is an expansion stroke which is longer than the compression stroke. In this way, more of the energy of combustion is converted into useful work. Figures 5a), b) and c) illustrate a first embodiment of an engine having a control shaft for operating on an Atkinson cycle.

In Figure 5a, a single cylinder swing beam engine has a cylinder 10, a piston 12, and a piston connecting rod 16 that may be similar to the piston and connecting rod in Figure 1. A swing beam 40 is pin connected at one end 42 to the connecting rod 16, and at its other end 44 is pin-connected to a control shaft 46 rotatable about axis 48. The connecting rod 20 is pin-connected to the swing beam 40 and also to the crankshaft 22. Four rotational positions of the control shaft 46, spaced 90° apart, are indicated by $P_1$, $P_2$, $P_3$ and $P_4$. Four 90° positions of rotation of the crankshaft 22 are indicated by $C_1$, $C_2$, $C_3$, and $C_4$.

The instantaneous position of the piston 12 depends both on the position of crankshaft 22 and on the position of control shaft 46. Figure 5b) illustrates possible positions that the forward face 12a of the piston 12 may have as follows: (i) $L_{max}$, $R_{max}$, where the rotational positions of shafts 22, 46 are angularly 180° out of phase, such that the effect on piston displacement is additive; (ii) $L_{min}$, $R_{min}$, where the rotational positions of the shafts 22, 46 are angularly in phase such that the crankshaft and control shaft partially cancel each other out; or (iii) $L_{nom}$, $R_{nom}$, where the shafts 22, 46 are 90° out of phase. The three positions indicated by R are the possible positions at top dead center of the cycle, whereas the positions indicated by L are possible positions at bottom dead center of the cycle.

For example, if crankshaft 22 is at position $c_1$ and control shaft 46 is at position $P_3$ (180° out of phase), the forward face 12a of the piston 12 would be at position $R_{max}$. If crankshaft 22 is at position C3, and control shaft 46 is at position $P_1$, the forward face of piston 12 would be at position $L_{max}$. In contrast, if crankshaft 22 is at position $C_3$, and control shaft 46 is at position $P_3$ (in phase), the forward face of piston 12 would be at position $L_{min}$, rather than $L_{max}$. The shafts 22, 46 can be operated such that, at top dead center and bottom dead center, the phasing of shafts 22, 46 is not a multiple of 90°.

For the operation of Figure 5a) in a four stroke engine, drive means (not shown) are provided to rotate the control shaft at plus or minus 1/2 the speed of the crankshaft, i.e. at camshaft speed. The control shaft is preferably directly geared to the crankshaft. Mechanisms for doing so are well within the skill of the art. However, theoretically the control shaft may be independently actuated by a separate drive.

Figure 5c) is a table indicating the operation of the Figure 5a) device in the case where the control shaft 46 operates at one-half the speed of the crankshaft 22. As shown, in the time it takes control shaft 46 to execute one revolution, the crankshaft 22 executes two revolutions. The length of any stroke, as shown in figure 5c) corresponds to the distance between L and R positions at the beginning and end of the stroke. In this illustrative example, the piston travels from $L_{max}$ to $R_{nom}$ during the exhaust stroke, between $R_{nom}$ and $L_{min}$ during the intake and the compression strokes, and from $R_{nom}$ to $L_{max}$ during the power stroke. From the viewpoint of energy, the most significant stroke is the power stroke, and as shown in Figure 5c), the length of the power stroke is longer than the intake and compression strokes, as in Atkinson cycle operation.

As noted above, the phasing between the crankshaft 22 and control shaft 46 can be varied to modify the cycle stroke and timing. For example, the shafts 22, 46 in the engine shown in Figure 5a) may be slightly out of phase so as to provide more time at the beginning of the power stroke than in the conventional slider crank mechanism. Also, the shafts 22, 46 may be rotated in opposite directions.

The control means according to the invention can be used to alter the character of the thermodynamic cycle in at least two ways; by changing the lengths of the stroke, for example as illustrated in connection with Figures 5a), b) and c) where the control shaft operates at a fraction of crankshaft speed, and by changing the cycle event timing, which can be effected by changing the phasing between the crankshaft and control shaft rotation and also by the dimensions selected for the control means and its position relative to the rest of the engine. In the case of a four stroke cycle, typical values of the ratio V, which is the ratio of average speed of control shaft to that of crankshaft, is $V = \pm(n-1/2)$, where n is a positive integer. In the case of a two stroke cycle, the ability to adjust the character of the thermodynamic cycle is less that in the case of a four stroke cycle. If a speed ratio of half were used, for example, the ratio of the length of the power and compression stroked could exceed unity only every second cycle. However, the ability to control cycle timing by adjusting the phasing between crankshaft and control means exists also in two cycle engines.

In order to obtain the most favourable force transmission in swing beam engines, it is desirable to restrict the angular swing of the swing beam, just as the angularity of the connecting rod in ordinary slider-crank engines is restricted. In swing beam engines, the angular swing of the swing beam should preferably be maintained within about 15° from the direction perpendicular to piston displacement. This applies both to conventional swing beam engines with a control shaft according to this invention as well as to the Rapson slide type of swing beam engine.

When a continuously rotating control shaft, e.g. 45, is added to a swing beam engine, some of the power is transmitted to the crankshaft through the control shaft 46. The latter, therefore, needs to be proportioned accordingly. When the control shaft functions as a control level, however (as in variable stroke operation, e.g.), no power will be transmitted by the control lever to the crankshaft.

The control shaft, however, need not be joint connected directly to the swing beam. As will be evident in connection with the embodiments shown in figures 8 to 11, the connection between control shaft and swing beam may comprise a connecting link assembly such that the combination of control shaft, connecting link assembly, swing beam and fixed link constitute a slider crank motion, or a crank and rocker motion, or other motion.

Many variations of the construction of the control means shown in Figure 5a fall within the scope of the invention, some of which are described further on, and can be derived from two degrees of freedom mechanisms.

Figure 6 shows a swing beam engine which is similar to that shown in Figure 5a), except that the swing beam 40 is directly pin-connected to the piston 11. In this case, the opposite end 44 of the swing beam 40 is connected to the control shaft 46 by connecting rod 47, rather than being directly connected to the control shaft 46 as in Figure 5a). Figure 6 also indicates schematically a gear connection 45 between the crankshaft 22 and control shaft 46 for actuating the latter.

It should be noted that, in all of these embodiments, the relative positions of the crankshaft and control shaft may be reversed. Also, the control shaft may be located either on the same side of the swing beam as the crankshaft or on the opposite side thereto. Further, where the crankshaft and control shaft are both on one side of the swing beam, they may be on the same side of the swing beam as the piston, or on the opposite side.

Figures 7a to 7d show another form of a swing beam engine namely, a Rapson slide-type engine of the type disclosed in Figures 3a) to 3c), but based on a two degrees-of-freedom mechanism, including a control shaft, for yielding Atkinson cycle operation. In Figure 7a, a swing beam 50 includes a Rapson guide portion 51 at its lower end, which has an elongate guide slot therein to receive a pivotable sliding block 52. The guide portion 51 and the swinging block 52 correspond to elements 31 and 36, respectively, in Figure 3a). A pivot pin 53 of the block 52 is also connected to the rotating control shaft 46.

Figures 7b) and 7c) illustrate two embodiments of swing beams 50 and 50a which are connected directly, or by a link 16, to a piston 11, 12. Each includes Rapson slide elements 51, 51 directly pin-connected to the control shaft 46. In the case of Figure 7b), where the swing beam 50 is directly pin-connected to the piston 11, the crankshaft 22 is connected to the swing beam 50 through an intermediate link 20 in order to maintain a co-ordinated movement. In Figure 7c), an intermediate link 20 is not used. Figure 7d) is similar to Figure 7b), except that the positions of the control shaft 46 and crankshaft 22 have been reversed.

It should be noted that regardless of whether the engine includes a control shaft geared to the crankshaft, or whether the control shaft functions as a lever, the positions of which correspond to a desired stroke, the only power loss associated with the control shaft or lever is that required to overcome frictional losses.

The embodiments illustrated in Figures 7a) to 7d) may operate in a manner similar to Figure 5a). Drive means (not shown) are coupled to the control shaft 46 to rotate the control shaft 46 at a predetermined speed, preferably at a fraction of the crankshaft speed for producing Atkinson cycle operation. The phasing between control shaft 46 and crank shaft 22 may be as described in connection with Figure 5c, or may be varied to change the cycle event timing.

Embodiments of this invention can also be used for variable stroke operation. In this case, the control shaft functions as a control lever. It is possible to employ the embodiments of Figures 3 to 6 for this type of operation, by using a suitable controlled drive for the control shaft. But, for variable stroke operation, embodiments incorporating the additional features disclosed in connection with figures 8 to 11 are preferred.

Figure 8a) shows schematically a Rapson slide type of swing beam engine in which the position of the control shaft 46 determines the position of a swinging block 60 by means of a slider crank mechanism. The control shaft 46 is connected by a control rod 62 to a sliding block 64, which can move longitudinally in a fixed slideway 66. As shown in Figures 8b) and 8c), the sliding block 64 is connected, by a pivot pin 68, to an upper swinging block 60.

The swing beam 50a includes a Rapson guide portion 51 similar to the constructions shown in Figures 3a), 7c) and 7d). The guide 51 slidingly engages the upper swinging block 60.

Pivot pin 68 thus also forms the pivot point for the swinging block 60. With the pivot pin 68 stationary, the engine operates as described in connection with Figure 3a). However, because the pivot pin 68 can be displaced along slideway 66, this construction provides several additional modes of operation

The construction shown in Figure 8a) is merely schematic. It will be apparent to persons skilled in the art that, in view of the forces transmitted through the mechanisms, the actual construction of Figure 8a) may take a variety of forms. Figures 8d) and 8e) show one such example, in which like elements have been given numbers corresponding to the components of Figure 8a).

In one control mode, the control shaft 46 acts as a control lever, the position of which regulates piston stroke. Figure 9 illustrates a preferred kinematic layout for effecting this arrangement, showing several positions ($M_1$, $M_2$, $M_3$) of the center M of the swinging block 60. The illustrated geometry provides a stroke variation of up to approximately 30% of maximum at a constant compression ratio (9:1 in the layout).

Figure 9 illustrates that, by kinematic synthesis or layout, appropriate dimensions may be determined that will (a) provide a variable stroke capability; (b) maintain a nearly constant compression ratio; and (c) maintain essentially a constant top dead center timing. As can be seen in Figure 10, the points $M_1$, $M_2$ and $M_3$ are nearly collinear, but they are not aligned with the axis of the swing beam at top dead center. In other words, the position of the piston, at top dead center of the stroke, varies from positions $C_1$ to $C_2$ to $C_3$ as shown in the layout in Figure 9 (the piston position is indicated by "C", the piston clearance at top dead center). The length of piston stroke differs for each position $M_1$, $M_2$, $M_3$, but because the top dead center position varies in the same proportion, the final compression ratio remains essentially the same.

Illustrative dimensions of the various links are shown in Figure 9, where "r" is the radius of the crankshaft 22, "R" is the length of the connecting rod 20, and A-B is the length of the swing beam 50a. $A_1$, $B_1$, and $A_1'$, $B_1'$ represent the positions of the ends 32, 34 of the swing beam 50a at top dead center and bottom dead center for pin position $M_1$. $A_2$, $B_2$, and $A'_2$, $B'_2$, and the broken line, indicate the corresponding end positions, and swing beam position, respectively, for pin position, $M_2$. $A_3$, $B_3$ and $A'_3$, $B'_3$, and the dashed line, indicate the positions at $M_3$. Points $C_1$, $C_2$, and $C_3$ indicate the piston top dead center positions for pin positions $M_1$, $M_2$, and $M_3$, respectively. Finally, "P" is the distance between the piston axis and the crankshaft axis.

As can be seen from Figure 9, points $M_1$, $M_2$, $M_3$ are nearly collinear, so that the slider crank guidance shown in Figure 8a is feasible. In addition, the timing of the top dead centre position (determined by points $B_1$, $B_2$, and $B_3$ of the layout) remains essentially unchanged. Hence, stroke variation can be obtained at nearly constant compression ratio and essentially without disturbing valve timing at or near top dead center.

In another mode of operation, in the case of a four stroke engine, the control shaft is driven typically at an odd multiple of half crankshaft speed. With appropriate phasing of the control shaft and crankshaft, such that the power stroke is made longer than the compression stroke, this will produce an Atkinson cycle. The phasing of the control shaft relative to the crankshaft, to maintain normal cycle timing, should be such that the top dead center position corresponds to the position in which the swinging block is at its extreme position.

In order to obtain the foregoing modes of operation, suitable controls and means for engaging and disengaging the control shaft can be employed. For example, in the case of the first mode of embodiment, a microprocessor controller 49 actuates (see Figure 8a)) the control lever 46. In the latter mode, the control lever preferably is positively connected to the control shaft. A phase changer can also be employed in order to adjust or maintain correct valve timing and/or to vary the Atkinson cycle timing within reasonable limits.

Figure 10 illustrates a mechanism for providing another mode of operation of the configuration shown in Figure 8a). In this embodiment, rather than providing the fixed guide 66 of Figure 8a), a guide 66a is held between a fixed pivot 67 and an eccentric 68. For clarity, only the bottom member 64 of the sliding block assembly 64, 68 is illustrated. A guide 66a can be orientated in the manner shown in Figure 9, whereby at center position of the eccentric 68 the control member 46 moves the block 64 so as to change stroke without changing compression ratio. The angular orientation of the guide 66a, however, which governs the path of the auxiliary slider 64, is adjustable by the eccentric 68, which will thereby increase or lower the compression ratio. The effect of the timing on the top dead center position may be negligible if the compression ratio variation is limited to a reasonably small percentage of nominal.

Any suitable drive means may be connected to the eccentric for controlled actuation thereof. In engine operation, there exist a number of known engine operating conditions where it is desirable to run at reduced engine compression ratio, or to temporarily reduce compression ratio (e.g. during engine knocking). the drive means may be controlled responsive to any such desired engine operating parameters.

Figure 11 shows an alternative arrangement in which the guidance of a swinging block 70 takes place below the crankshaft and the control linkage in this case is a crank and rocker. As noted before, the relative positions of these elements are interchangeable. In this case, the control shaft 46 is pin-connected to a plate 72, fixedly pivoted about pivot point 74. The plate in turn is pin-connected at 76 to the swinging block 70. The path of the pin on a swinging block is a circular arc, the orientation and radius of which are adjustable within limits to satisfy design requirements.

If desired, a phase changer (between the crankshaft or camshaft and the control shaft) may be employed in any of the embodiments. A phase changer, as discussed above, will modify the movement of the piston stroke as a function of time, and thereby change timing and other operating characteristics.

Figure 9 illustrates that, by appropriate kinematic design, embodiments of the invention can provide variable stroke operation in which changes in top dead center timing are negligible. In other embodiments, however, an adjustment in phase may be needed in order to control valve timing, the timing of an Atkinson cycle, and the timing in variable stroke or variable compression ratio operating modes. The control levers for variable stroke operation, which have been described in connection with Figures 8 to 11, can also be proportioned for variable compression ratio operation if desired.

If a phase changer is needed, well known bevel gear or spur gear type of arrangements, as well as others, including known variable valve timing mechanisms, can readily be used in the embodiments of the invention.

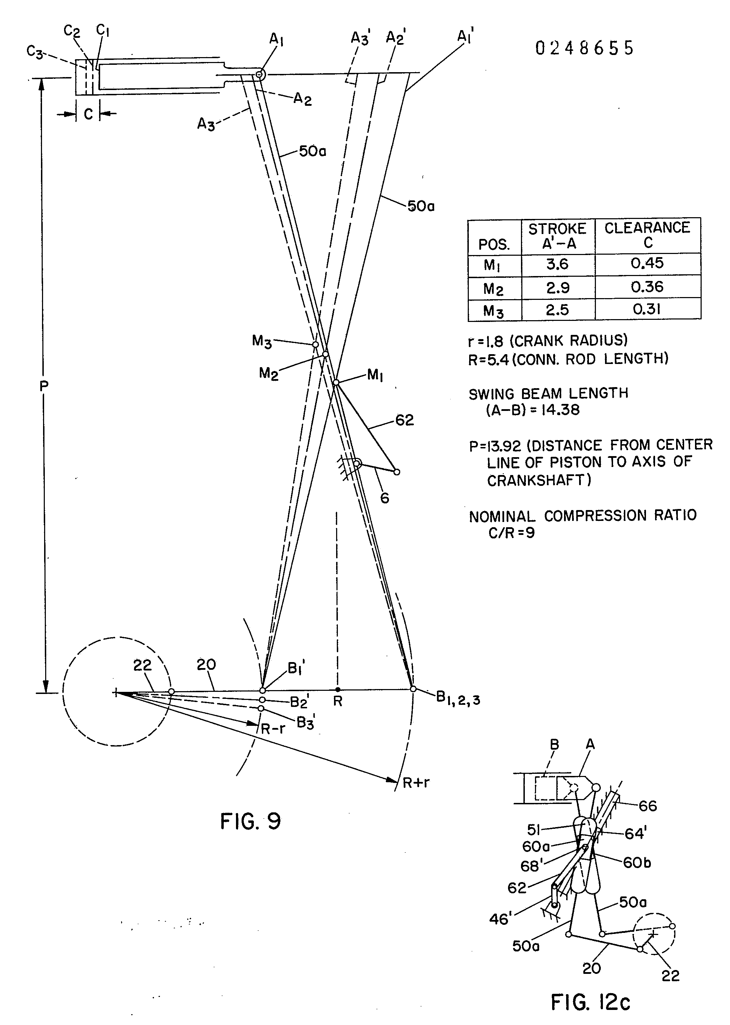

Figures 12a),b) and c) illustrate an embodiment of a four cylinder variable-stroke engine, in which the embodiment of Figures 8a) to 8e) is used for each of the four cylinders, as indicated in the elevation shown in Figure 12c). The phasing of the crank throws of crankshaft 22 is preferably 0°-180°-180°-0°, as in conventional, in-line four cylinder engines. Corresponding positions of the four pistons are shown in Figure 12a).

Each piston A, B is connected by a swing beam 50a and a rod 20 to the crankshaft 22. As in the case of Figure 8a), each swing beam 50a engages a swing block 60' so as to slide and pivot relative to a pivot pin 68', and an auxiliary slider 64' is displaceable along a fixed slideway 66 to adjust the position of the pivot pin 68'.

The pin 68' extends perpendicular to the slideway through a swinging block 60' associated with each swing beam 50a. Sliders 64 (and associated slideways 66) are provided to support the pin 68' at axially spaced locations.

The position of the sliders 64', and the pivot pin 68' for all of the swing beams 50, is controlled by a unitary control shaft 46', which acts as a control lever, coupled to the pivot pin 68' through links 62, each link 62 being associated with a corresponding slider 64'. The control shaft may, if desired, be integral with the camshaft or may be separate. Alternatively, the control shaft can be designed and dimensioned to function in an Atkinson cycle or a variable compression ratio mode of operation.

The arrangement in Figure .12c) is for schematic clarity and persons skilled in the art will readily recognize that the actual mechanical structures will differ, for example as described in connection with figures 8d) and 8e).

The ability to use a unitary control lever 46' makes the present invention especially advantageous for use in an in-line engine. The timing during the power stroke can be optimized by appropriate choice of linkage proportions, as described in connection with Figure 2a).

The dynamic balance of the engine is analogous to that of two opposed piston engines. However, the balance will be better. In an opposed piston engine involving connecting rods phased 180° on a common crankshaft, the connecting rods produce an inertial imbalance, because their rotational inertias act in the same sense. In the four cylinder engine of Figures 12a),b) and c), however, the imbalance associated with the connecting rods for the A-A pistons is opposite to that associated with the connecting rods of the B-B pistons.

In multicylinder engine configurations based on the embodiments which are described above, it is possible to consider various modes of operation, including the following;    1. fixed stroke-Otto cycle;
   2. fixed stroke-Atkinson cycle;
   3. variable stroke-Otto cycle;
   4. variable stroke-Atkinson cycle; and
   5. variable compression ratio-Atkinson or Otto cycles

For any given engine, it may be desirable to utilize one, or more than one, of these modes as options. Mode 1 corresponds to the conventional internal-combustion engine, while Mode 5 involves adjustments, such as that described in connection with Figure 10.

In the case of Mode 2 operation, the control shaft can be unitary, but the throws of crank and control shafts need to be phased appropriately. For example, if the arrangement in Figure 5a) is used to construct an in-line, four-cylinder engine with 0°-180°-180°-0° crank throws and with the control shaft operating at one half crank speed, the phasing of the throws of the control shaft would be 0°-270°-180°-90° to achieve the Figure 5c) timing in each cylinder.

In the case of Mode 3 operation, the control shaft functions as a control lever and the lever position is the same for all cylinders, i.e. the control shaft can be unitary and function as an eccentric, as shown in Figure 12.

In the case of Mode 4 operation, it is possible to use a unitary control shaft configured as in Mode 2 operation, but the position of the control shaft is now a function of stroke, i.e. the axis of the control shaft must be displaceable along axis $M_1$-$M_2$-$M_3$ of Figure 9 by an amount depending on stroke. A phase changer may be needed in this mode of operation and any of the well known phase changers can be used for this purpose.

While the piston/cylinder configuration of the embodiment shown in Figure 12 is that of the in-line, four-cylinder, slider crank engine, it will be clear to those skilled in the art that any in-line or other piston-cylinder configuration can be obtained with swing beam designs of the type described in Figure 12 by replacing the slider crank piston actuation of the conventional in-line engine or other conventional engines by the swinging beam actuation described in this invention.

The engine configurations which have been described can function with either internally or externally operating pistons. The term internal refers to opposed piston arrangements in which the combustion chamber is located between the pistons. External arrangements are those in which the combustion chamber is adjacent to the ends of the piston which are furthest from the place of symmetry of the engine.

Many of the present embodiments of this invention are derived from two degrees of freedom linkages by using one degree of freedom for the crankshaft motion and the other degree of freedom for the motion of the control means. These mechanisms retain favourable proportions when designed for Atkinson cycle operation, variable stroke operation, and variable compression ratio operation, without a significant diminution of their force transmission and dynamic characteristics. All of the embodiments may be used in two stroke as well as four stroke engines, and in spark ignited as well as diesel type engine constructions.

The foregoing represents preferred embodiments of the invention. Further variations and modifications of the constructions shown and described herein will be apparent to persons skilled in the art, without departing from the inventive concepts disclosed herein.

## Claims

1. An internal combustion engine having a cylinder (10), a piston (11, 12) displaceable in the cylinder (10), a crankshaft (22), a swing beam (40, 50, 50a), first coupling means (16,32) connected between one end of the swing beam (40,50,50a) and the piston (11,12), second coupling means (20) connected between the crankshaft (22) and the swing beam (40, 50, 50a), and pivot establishing means, including pivot means (44,68) about which the swing beam (40, 50, 50a) is rotatable, characterised by pivot varying means, which are operable to vary the position of the pivot means (44,68) during the engine operation.

2. An internal combustion engine as claimed in claim 1, characterised in that the pivot varying means includes control means which are operable to move a control shaft (46) in a control manner in response to the engine operation.

3. An internal combustion engine as claimed in claim 2, characterised in that the control shaft (46) is movable through a range of selected positions, and the control means include means, responsive to an engine operating parameter, for actuating the drive means to move the control shaft (46) between selected positions, whereby the control shaft (46) functions as a control lever.

4. An internal combustion engine as claimed in claim 2 or 3, characterised in that the first coupling means comprise a connecting link (16) between the piston (12) and the swing beam (50a), the second coupling means comprise a pin directly connecting the swing beam (50, 50a) and the crankshaft (22), and the control means include a pair of co-operating Rapson slide elements (51, 52), one pivotally mounted on the control shaft (46) and the other being associated with the swing beam (50).

5. An internal combustion engine as claimed in claim 2, characterised in that the control means comprise:

a sliding block (64) engaged with the pivot establishing means (46);

guide means (66) for guiding the sliding block (64) along a predetermined path of movement; and

coupling means connected between the control shaft (46) and the sliding block (64).

6. An internal combustion engine as claimed in claim 5, characterised in that the pivot-establishing means (46) comprise a pair of co-operating Rapson slide elements (51, 52), one pivotably mounted on the sliding block (64) and the other constituting part of the swing beam (50a).

7. An internal combustion engine as claimed in claim 5 or 6, characterised in that the guide means (66) guide the sliding block (62) along a substantially linear path of movement oriented such that, for various positions of the sliding block (62) along the path, the compression ratio of the engine and top dead center timing remain essentially constant.

8. An internal combustion engine as claimed in claim 2, characterised in that the control means comprise:

rocker means coupled to the control shaft, and a pair of co-operating Rapson slide elements, one pivotally mounted on the rocker means and the other constituting part of the swing beam (50,50a).

9. An internal combustion engine as claimed in any of claims 5 to 8, characterised in that means are provided for moving the control shaft (46) in a periodic movement for varying piston stroke during engine revolution.

10. An internal combustion engine as claimed in any preceding claim, CIT the pivot means (44,68) is fixed relative to the engine cylinder (10) and the control means for varying the position of the pivot point comprise means for displacing the pivot means (44,68) relative to the swing beam (50) along the longitudinal axis thereof.

11. An internal combustion engine as claimed in any of claims 1 to 9, CIT the control means for varying the pivot point comprise means for displacing the pivot point relative to the engine cylinder (10).

0248655

FIG. 1 (PRIOR ART)

FIG. 2 (PRIOR ART)

FIG. 3a

FIG. 3b

FIG. 3c

L=2.0167 X

E=0.4570 X

E=0.2416 X

PROPORTIONS: $(E+R+L)^2 = 8EL$

FIG. 4

0 2 4 8 6 5 5

FIG. 5a

FIG. 5b

| CONTROL SHAFT POSITION | CRANK PIN POSITION | PISTON POSITION | STROKE | STROKE LENGTH |
|---|---|---|---|---|
| $P_1$ | $C_3$ | Lmax | | |
| | | ↓ | EXHAUST | MAXIMUM |
| $P_2$ | $C_1$ | Rnom | | |
| | | ↓ | INTAKE | MINIMUM |
| $P_3$ | $C_3$ | Lmin | | |
| | | ↓ | COMPRESSION | MINIMUM |
| $P_4$ | $C_1$ | Rnom | | |
| | | ↓ | POWER | MAXIMUM |
| $P_1$ | $C_3$ | Lmax | | |

FIG. 5c

FIG. 6

FIG. 7a

FIG. 7b

FIG. 7c

FIG. 7d

0248655

FIG. 8a

FIG. 8b

FIG. 8c

FIG. 8e

FIG. 8d

FIG. 10

FIG. 11

FIG. 12a

FIG. 12b

0248655

| POS. | STROKE A'-A | CLEARANCE C |
|------|-------------|-------------|
| M₁ | 3.6 | 0.45 |
| M₂ | 2.9 | 0.36 |
| M₃ | 2.5 | 0.31 |

r = 1.8 (CRANK RADIUS)
R = 5.4 (CONN. ROD LENGTH)

SWING BEAM LENGTH
(A-B) = 14.38

P = 13.92 (DISTANCE FROM CENTER
LINE OF PISTON TO AXIS OF
CRANKSHAFT)

NOMINAL COMPRESSION RATIO
C/R = 9

FIG. 9

FIG. 12c